# EUROPÄISCHE PATENTSCHRIFT

(11) **EP 3 888 155 B1**
(45) Veröffentlichungstag und Bekanntmachung des Hinweises auf die Patenterteilung: **18.11.2026**
(21) Anmeldenummer: 19809470.8
(22) Anmeldetag: 26.11.2019
(51) Int. Cl.: H01M 50/107, H01M 50/179, H01M 50/148, H01M 50/342, H01M 50/152, H01M 50/169

(54) **ELEKTROCHEMISCHE ENERGIESPEICHERZELLE**
ELECTROCHEMICAL ENERGY STORAGE CELL
ÉLÉMENT ACCUMULATEUR D'ÉNERGIE ÉLECTROCHIMIQUE

(30) Priorität: 28.11.2018 DE 102018130171
(43) Veröffentlichungstag der Anmeldung: 06.10.2021
(73) Patentinhaber: Carl Freudenberg KG, 69469 Weinheim (DE)
(72) Erfinder: KRITZER, Peter, 67147 Forst (DE); NUSSKO, Marina, 68259 Mannheim (DE); HOFMANN, Jens, 64285 Darmstadt (DE); OSEN, Ernst, 69488 Birkenau (DE); SCHROIFF, Volker, 69502 Hemsbach (DE); ANSALDI, Ugo, 10045 Piossasco (IT); JÖST, Claus, 69469 Weinheim (DE); HILLESHEIM, Thorsten, 53604 Bad Honnef (DE)
(74) Vertreter: Steiert, Nico
(86) Internationale Anmeldenummer: PCT/EP2019/082599
(87) Internationale Veröffentlichungsnummer: WO 2020/109312

(56) Entgegenhaltungen:
- WO-A1-2018/139452
- DE-A1- 3 922 596
- US-A1- 2006 099 504

## Beschreibung

Die Erfindung betrifft eine elektrochemische Energiespeicherzelle, umfassend einen Zellwickel, welcher in einem Gehäuse aufgenommen ist, wobei das Gehäuse zumindest auf einer Stirnseite durch einen Deckel verschlossen ist, wobei der Deckel einen Befestigungsabschnitt zum Befestigen des Deckels auf dem Gehäuse und einen Polabschnitt zum Kontaktieren eines Ableiters des Zellwickels aufweist.

Eine derartige Energiespeicherzelle ist beispielsweise aus der DE 10 2008 025 884 A1 bekannt und findet in der Technik vielfältig Einsatz. Eine derartige Energiespeicherzelle ist in der Draufsicht betrachtet häufig kreisförmig ausgebildet und ist daher auch unter der Bezeichnung Rundzelle bekannt. Rundzellen werden beispielsweise verwendet, um akkubetriebene Handwerkzeuge anzutreiben. Es ist aber auch bekannt, eine Vielzahl der Rundzellen zu einer Einheit zusammenzufassen, welche wiederum geeignet ist, Energie für ein Elektrofahrzeug bereitzustellen.

Bei den derzeit bekannten Rundzellen wird der Polabschnitt des Deckels außenumfangsseitig in einem ringförmigen Kunststoffelement aufgenommen und das Gehäuse ist im Bereich des ringförmigen Elementes so geformt, dass der Polabschnitt des Deckels und das ringförmige Element von dem Gehäuse zumindest teilweise umfasst sind. Das ringförmige Element bildet dabei eine elektrische Isolierung des Polabschnittes gegenüber dem Gehäuse. Dies ist insbesondere dann wichtig, wenn der Polabschnitt einen Ableiter des Zellwickels aufnimmt und eine Elektrode bildet und das Gehäuse der Energiespeicherzelle den zweiten Ableiter aufnimmt und die andere Elektrode bildet. Bei dieser Ausgestaltung ist ein defekter elektrisch leitfähiger Kontakt zwischen Polabschnitt und Gehäuse unbedingt zu vermeiden. Die Verformung des Gehäuses erfolgt zumeist mittels Crimpen. Um zu verhindern, dass im Inneren des Gehäuses aufgrund einer Fehlfunktion ein unzulässig hoher Druck entsteht, ist der Deckel mit einer Einrichtung versehen, welcher bei unzulässig hohem Druck einen Druckausgleich in Richtung der Umgebung bewirkt. Ferner verformt sich bei Überschreiten eines definierten inneren Überdrucks der Deckel so weit, dass der elektrische Kontakt zwischen Zellwickel und Polabschnitt unterbricht.

Durch die notwendige Verformung des Gehäuses im Zuge des Crimpvorgangs zur Fixierung des Deckels steht nicht die komplette Bauhöhe des Gehäuses für den Zellwickel zur Verfügung, es muss ein ausreichend hoher Totraum zur Aufnahme des Deckels und für die Verformung zur Verfügung stehen. Des Weiteren ergibt sich das Problem, dass das ringförmige Element, welches einen Isolator bildet, durch den Umformvorgang beschädigt werden kann, was zu einem Ausfall der Energiespeicherzelle führt.

Die DE 39 22 596 A1 und die US 2006/099504 A1 beschreiben eine elektrochemische Energiespeicherzelle, umfassend einen Zellwickel, welcher in einem Gehäuse aufgenommen ist, wobei das Gehäuse zumindest auf einer Stirnseite durch einen Deckel verschlossen ist, wobei der Deckel einen Befestigungsabschnitt zum Befestigen des Deckels auf dem Gehäuse, einen Polabschnitt zum Kontaktieren eines Ableiters des Zellwickels und eine Dichtung aufweist.

Der Erfindung liegt die Aufgabe zugrunde, eine Energiespeicherzelle bereitzustellen, welche eine kompakte Bauart aufweist und bei welcher eine sichere elektrische Isolierung des Polabschnittes gegenüber dem Gehäuse gegeben ist.

Diese Aufgabe wird mit den Merkmalen von Anspruch 1 gelöst. Auf vorteilhafte Ausgestaltungen nehmen die Unteransprüche Bezug.

Zur Lösung der Aufgabe sind der Befestigungsabschnitt und der Polabschnitt über ein Ausgleichselement miteinander verbunden, wobei das Ausgleichselement elastisch und elektrisch isolierend ausgebildet ist. Dabei bilden der Befestigungsabschnitt, der Polabschnitt und das Ausgleichselement einen integralen Bestandteil des Deckels. Im Fall einer Rundzelle ist der Deckel in der Draufsicht betrachtet rund ausgebildet. Der Polabschnitt ist dabei im Zentrum des Deckels angeordnet, umgeben von dem Ausgleichselement. Der Befestigungsabschnitt befindet sich außenumfangsseitig am Deckel. Dadurch, dass der Polabschnitt und der Befestigungsabschnitt durch das elektrisch isolierende Ausgleichselement miteinander verbunden sind, ist gleichzeitig eine elektrische Isolierung des Polabschnittes gegenüber dem Gehäuse gegeben. Dadurch kann ein zusätzliches Element zur elektrischen Isolierung zwischen Deckel und Gehäuse entfallen. Dieses wurde bislang aus einem ringförmigen Dichtelement gebildet, welches auch als Isolationselement fungierte. Das Ausgleichselement besteht dabei vorzugsweise aus Kunststoff, beispielsweise aus einem spritzgießfähigen Kunststoff. Der Befestigungsabschnitt und der Polabschnitt können aus metallischem Werkstoff bestehen, wobei der Polabschnitt aus elektrisch leitfähigem Material besteht.

Das Ausgleichselement kann aus elastomerem Werkstoff ausgebildet sein. Dadurch kann sich das Ausgleichselement reversibel verformen, was insbesondere im Hinblick auf den Druckausgleich zwischen Gehäuseinnerem und Umgebung vorteilhaft ist.

Gemäß einer alternativen Ausgestaltung kann das Ausgleichselement auch so gestaltet sein, dass eine gewisse Elastizität gegeben ist. Insbesondere kann das Ausgleichselement derart geformt sein, dass das Ausgleichselement elastisch beweglich ist. Dazu können in das Ausgleichselement beispielsweise umlaufende Sicken eingebracht werden, welche eine Beweglichkeit des Polabschnittes in axialer Richtung ermöglichen. Ferner ist denkbar, das Ausgleichselement zumindest abschnittsweise in Form eines Faltenbalgs auszubilden. Das Ausgleichselement kann auch in Form von Filmscharnieren ausgebildete Abschnitte aufweisen. Die elastisch ausgebildeten Bereiche können dabei konzentrisch in das Ausgleichselement eingebracht sein.

Durch die elastisch nachgiebige Formgebung ist möglich, das Ausgleichselement aus thermoplastischem Werkstoff auszubilden. Neben der Verwendung thermoplastischer Elastomere können dabei insbesondere kostengünstige thermoplastische Werkstoffe wie Polyethylen (PE), Polyethylenterephthalat (PET) oder Polypropylen (PP) zum Einsatz gelangen. Diese thermoplastischen Werkstoffe weisen zwar nur eine vergleichsweise geringe Elastizität auf, durch die die elastische Formgebung des Ausgleichselementes ergibt sich aber insgesamt die für das Ausgleichselement gewünschte Elastizität und reversible Beweglichkeit.

Alternativ kann das Ausgleichselement sowohl eine elastische Formgebung aufweisen, als auch aus elastischem Werkstoff, beispielsweise einem Elastomer ausgebildet sein.

In das Ausgleichselement ist erfindungsgemäß eine Sollbruchstelle eingebracht. Übersteigt durch fehlerhafte Vorgänge oder Materialfehler der im Inneren des Gehäuses herrschende Druck ein zulässiges Maß, öffnet sich die Sollbruchstelle und ermöglicht somit einen kontrollierten Druckausgleich. Gemäß einer vorteilhaften Ausgestaltung öffnet sich die Sollbruchstelle erst dann, wenn sich das Ausgleichselement so verformt hat, dass sich der Polabschnitt von dem Zellwickel beabstandet. Dadurch löst sich der Ableiter von dem Polabschnitt, so dass die Energiespeicherzelle von außen betrachtet stromlos ist. Die Sollbruchstelle ist vorzugsweise so ausgeführt, dass sich das Ausgleichselement irreversibel öffnet. Dadurch kann verhindert werden, dass die beschädigte Energiespeicherzelle weiterbetrieben wird.

Die Sollbruchstelle kann in Form einer Nut ausgebildet sein. Übersteigt der Druck im Inneren des Gehäuses ein vorbestimmtes Maß, bricht das Ausgleichselement entlang der Sollbruchstelle auf und ermöglicht so eine gezielte Absenkung des in der Zelle anstehenden Überdrucks. Dabei kann die Nut V-förmig und ringförmig ausgebildet sein und sich ausgehend von der dem Gehäuse abgewandten Seite des Ausgleichselementes in das Innere erstrecken.

Der Deckel kann stoffschlüssig an das Gehäuse angebunden sein. Dabei kann gemäß einer ersten Ausgestaltung die ringförmige Kante auf der ringförmigen Kante des Gehäuses aufliegen. Gemäß einer zweiten vorteilhaften Ausgestaltung weist der Befestigungsabschnitt einen zylindrischen Abschnitt auf, welcher das Gehäuse im Bereich der Öffnung außenumfangsseitig umfasst. Die stoffschlüssige Verbindung kann eine Klebeverbindung oder eine Schweißverbindung sein. Vorteilhaft bei der stoffschlüssigen Verbindung ist insbesondere der geringe Bauraumbedarf.

Der Deckel kann mittels elektromagnetischem Pulsumformen am Gehäuse festgelegt sein. Beim elektromagnetischen Pulsumformen werden Deckel und Gehäuse der Energiespeicherzelle pulsierenden magnetischen Feldern ausgesetzt, welche dazu führen, dass sich Deckel und Gehäuse entlang der einander berührenden Flächen erwärmen und auch lokal verformen. Aus der Erwärmung und lokalen Verformung resultiert eine stoffschlüssige und dichte Verbindung von Deckel und Gehäuse. Hierbei ist vorteilhaft, dass nur eine geringe Verformung erfolgt, so dass es im Gegensatz zu einer Umformung mittels Crimpen nicht erforderlich ist, für die Verformung einen gesonderten Bauraum vorzuhalten. Das Fügen von Deckel und Gehäuse kann auch entlang der Stoßkanten erfolgen.

Zwischen Zellwickel und Deckel kann ein Isolationselement angeordnet sein. Das Isolationselement verhindert, dass Bestandteile des Zellwickels mit dem Polabschnitt in Berührung gelangen.

Das Isolationselement kann aus einem elastomeren Werkstoff ausgebildet sein. Dabei kann das Isolationselement so ausgebildet sein, dass es den Zwischenraum zwischen Polabschnitt und Zellwickel nahezu vollständig ausfüllt. Dadurch kann ein Kontakt zwischen Zellwickel und Polabschnitt wirksam verhindert werden.

Das Isolationselement kann aus einem Silikonwerkstoff ausgebildet sein. Silikonwerkstoffe reagieren mit dem Elektrolyten, welcher neben dem Zellwickel in dem Gehäuse vorhanden ist und welcher den Zellwickel umgibt. Durch die Reaktion des Silikonwerkstoffes mit dem Elektrolyten quillt das Isolationselement auf und vergrößert sein Volumen. Dadurch kann der Zwischenraum zwischen Zellwickel und Polabschnitt vollständig mit dem Isolationselement gefüllt werden.

Das Isolationselement kann mit wärmeleitfähigen Partikeln ausgerüstet sein. Bislang besteht das Problem, dass ein Wärmetransport aus dem Inneren des Zellwickels schwierig ist. Dadurch, dass das Isolationselement aufgrund der wärmeleitfähigen Partikeln insgesamt wärmeleitend ist, kann im Inneren des Gehäuses, beziehungsweise im Inneren des Zellwickels, entstehende Wärme nach außen abgeführt werden. Dadurch kann die Kühlung der Energiespeicherzelle verbessert werden, was mit einer Erhöhung des Wirkungsgrades einhergeht.

Die Kühlung der Energiespeicherzelle kann nochmals verbessert werden, wenn zwischen dem Boden des Gehäuses und Zellwickel ein weiteres Isolationselement angeordnet ist. Bei dieser Ausgestaltung ist der Zellwickel sandwichartig zwischen zwei wärmeleitenden Isolationselementen angeordnet. Der Wärmetransport erfolgt dabei zwischen Zellwickel, den beiden Isolationselementen und Mantel des Gehäuses, bzw. Deckel und Boden des Gehäuses.

Einige Ausgestaltungen der erfindungsgemäßen Energiespeicherzelle werden nachfolgend anhand der Figuren näher erläutert. Diese zeigen, jeweils schematisch:
- Fig. 1: den oberen Abschnitt einer Energiespeicherzelle im Schnitt;
- Fig. 2: den Deckel einer Energiespeicherzelle;
- Fig. 3: den Deckel mit Ableiter;
- Fig. 4: den Deckel mit Sollbruchstellen;
- Fig. 5: den Deckel im Schadfall;
- Fig. 6: den Deckel mit aufgebrochener Sollbruchstelle;
- Fig. 7: eine Energiespeicherzelle mit Isolationselement;
- Fig. 8: eine Energiespeicherzelle mit Isolationselement im Boden und im Deckel;
- Fig. 9: ein Ausgleichselement mit elastischer Formgebung.

Die Figuren zeigen eine elektrochemische Energiespeicherzelle 1 in Form einer Rundzelle. Die Energiespeicherzelle 1 umfasst einen Zellwickel 2, welcher in einem Gehäuse 3 aufgenommen ist. Ist die Energiespeicherzelle 1 als Lithium-Ionen-Akkumulator ausgebildet, umfasst der Zellwickel 2 zwei Stromleiter und zwei Separatoren, wobei die Stromleiter durch die Separatoren voneinander getrennt sind. Auf die Stromleiter ist ein Aktivmaterial aufgetragen und die beiden durch die Separatoren getrennten Stromleiter sind zu einem runden Gebilde aufgewickelt. Das Gehäuse 3 besteht aus metallischem Werkstoff und ist zylindrisch ausgebildet. Auf einer Stirnseite weist das Gehäuse 3 einen materialeinheitlich und einstückig mit der zylindrischen Wand 15 ausgebildeten Boden 13 auf. Auf einer Stirnseite 4 ist das Gehäuse 3 durch einen Deckel 5 verschlossen.

Der Deckel 5 weist einen Befestigungsabschnitt 6 zum Befestigen des Deckels 5 auf dem Gehäuse 3 auf. Des Weiteren weist der Deckel 5 einen Polabschnitt 7 zum Kontaktieren eines Ableiters 8 des Zellwickels 2 auf. Der zweite Ableiter des Zellwickels 2 ist dem Boden 13 des Gehäuses 3 zugeordnet.

Der Befestigungsabschnitt 6 und der Polabschnitt 7 sind über ein Ausgleichselement 9 miteinander verbunden. Das Ausgleichselement 9 ist elastisch und elektrisch isolierend ausgebildet. Dabei besteht das Ausgleichselement 9 aus elastomerem Werkstoff.

In der Draufsicht betrachtet ist der Deckel 5 kreisförmig ausgebildet. Der Polabschnitt 7 ist zentral und mittig in dem Deckel 5 angeordnet und vom Ausgleichselement 9 umgeben. Das Ausgleichselement 9 ist formschlüssig und stoffschlüssig an den Polabschnitt 7 angebunden. Der Befestigungsabschnitt 6 weist einen scheibenförmigen Abschnitt auf, in dessen Öffnung das Ausgleichselement 9 und der Polabschnitt 7 angeordnet sind. Das Ausgleichselement 9 ist stoffschlüssig im Bereich der Kante der Öffnung des Befestigungsabschnittes 6 befestigt. Der Befestigungsabschnitt 6 weist ferner einen zylindrischen Abschnitt auf, welcher auf der stirnseitigen Kante des Gehäuses 3 aufliegt. Im Bereich der beiden sich berührenden Kanten sind Deckel 5 und Gehäuse 3 stoffschlüssig mittels elektromagnetischem Pulsumformen miteinander verbunden.

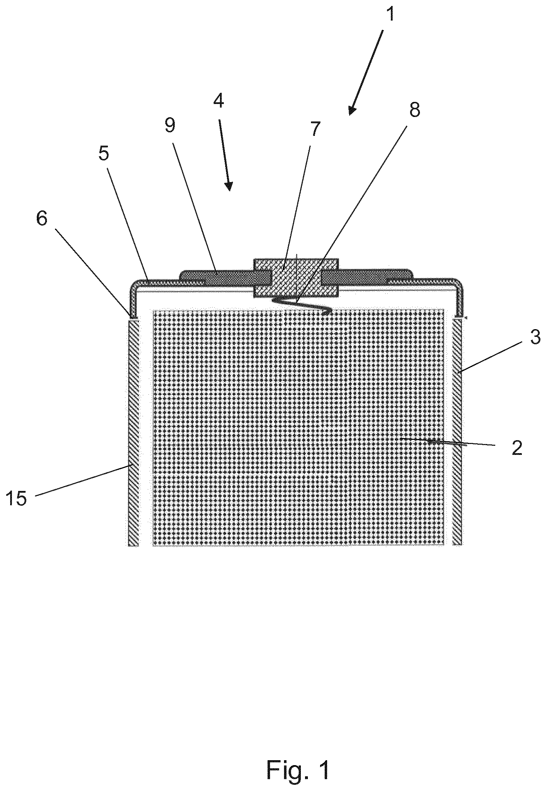

Figur 1 zeigt den oberen Abschnitt einer elektrochemischen Energiespeicherzelle 1 in Form einer Rundzelle. Der Ableiter 8 ist zentral in dem Zellwickel 2 mit einer Elektrode des Zellwickels 2 verbunden. Das Ausgleichselement 9 ist scheibenförmig ausgebildet und aufgrund der Ausbildung aus elastomerem Werkstoff elastisch. Dadurch kann sich der Polabschnitt 7 in Abhängigkeit des Innendrucks des Gehäuses 3 in axialer Richtung bewegen. Das Ausgleichselement 9 bildet eine elektrische Isolierung zwischen dem Polabschnitt 7 und dem Befestigungsabschnitt 6. Insofern kann das Gehäuse 3 samt Befestigungsabschnitt 6 einen zweiten Pol bilden.

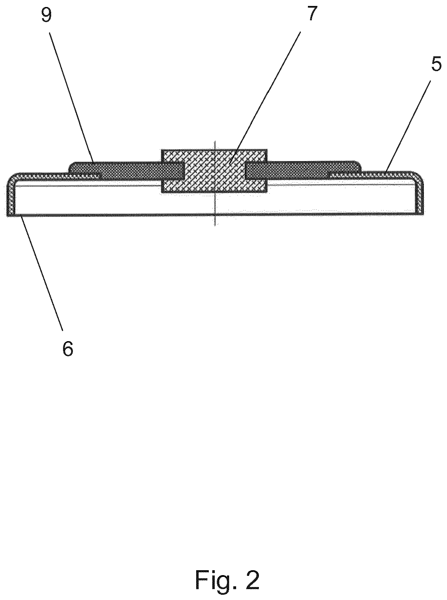

Figur 2 zeigt im Detail den in Figur 1 gezeigten Deckel.

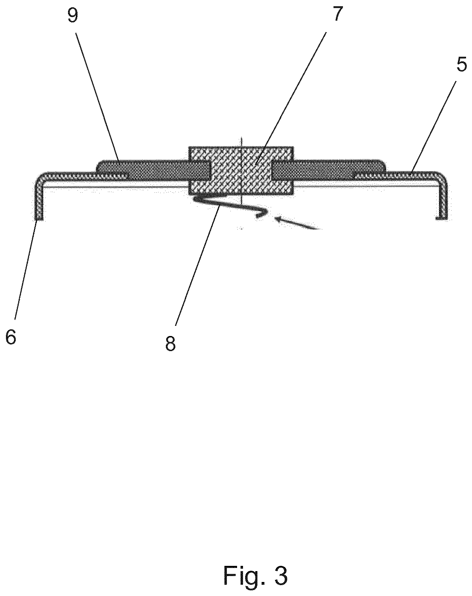

Figur 3 zeigt den in Figur 1 gezeigten Deckel im Detail samt Ableiter 8, welcher an dem Polabschnitt 7 elektrisch leitend befestigt ist.

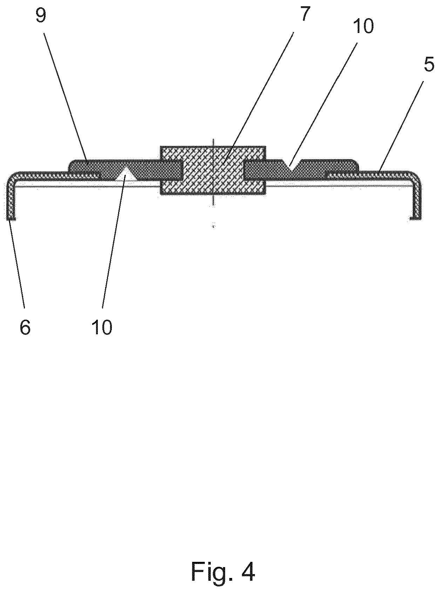

Figur 4 zeigt eine weitere Ausgestaltung des in Figur 1 gezeigten Deckels. Bei der vorliegenden Ausgestaltung ist das Ausgleichselement 9 mit einer Sollbruchstelle 10 versehen. Dabei zeigt Figur 4 zwei verschiedene Ausgestaltungen der Sollbruchstelle 10. Bei der Ausgestaltung rechts der Symmetrielinie ist die Sollbruchstelle 10 außenseitig in das Ausgleichselement 9 eingebracht. Bei der Ausgestaltung links der Symmetrielinie ist die Sollbruchstelle 10 auf der dem Zellwickel 2 zugewandten Seite des Ausgleichselementes 9 eingebracht. Bei beiden Ausgestaltungen ist die Sollbruchstelle 10 in Form einer v-förmigen Nut ausgebildet, welche konzentrisch den Polabschnitt 7 umgibt.

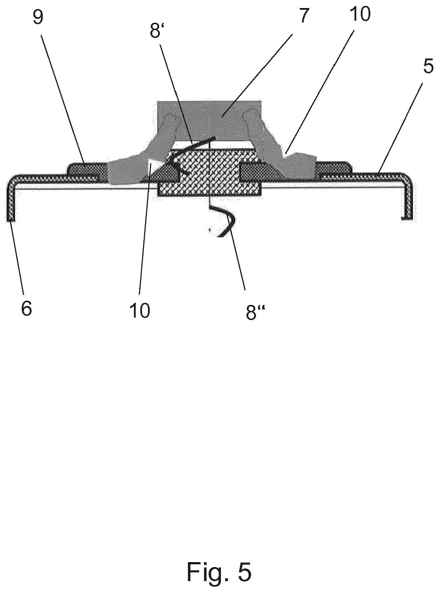

Figur 5 zeigt den in Figur 4 gezeigten Deckel 5, wobei sich der Polabschnitt 7 aufgrund erhöhten Innendruckes im Inneren des Gehäuses 3 in axialer Richtung von dem Zellwickel 2 beabstandet hat. Dabei ist der Ableiter 8 in zwei Abschnitte 8', 8" gerissen, so dass der Polabschnitt 7 gegenüber dem Zellwickel 7 elektrisch isoliert ist. Insofern ist die Energiespeicherzelle 1 bei dieser Ausgestaltung stromlos. Dadurch kann ein weiterer Ladevorgang der Energiespeicherzelle 1 verhindert werden, was nach dem Druckanstieg im Inneren der Energiespeicherzelle 1 besonders schädlich wäre. Bei der Ausgestaltung gemäß Figur 5 ist lediglich eine Verformung des Ausgleichselementes 9 erfolgt. Die Sollbruchstellen 10 sind noch intakt.

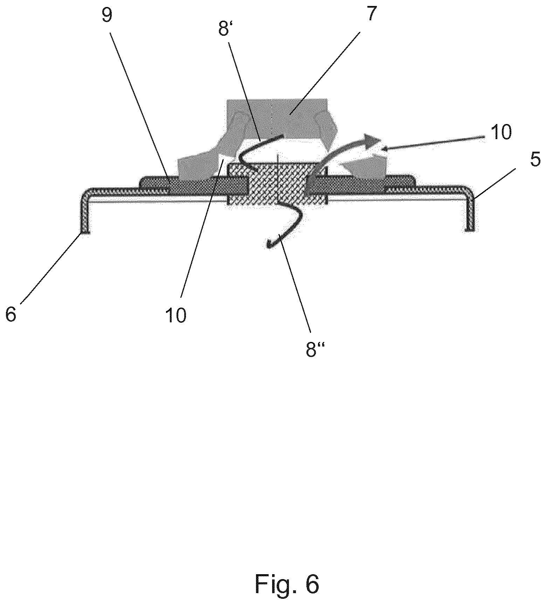

Bei der Ausgestaltung gemäß Figur 6 hat sich der Innendruck im Inneren des Gehäuses 3 im Vergleich zu der Ausgestaltung gemäß Figur 5 noch einmal erhöht. Dabei hat der zulässige Innendruck ein vorbestimmtes Maß überschritten und die Sollbruchstelle 10 hat sich geöffnet. Dadurch kann Gas aus dem Inneren des Gehäuses 3 entweichen, so dass sich der Druck im Inneren gezielt und kontrolliert reduziert. Insofern erfolgt durch das Öffnen der Sollbruchstelle 10 ein gezieltes Zerstören der Energiespeicherzelle 1 und ein explosives Zerstören der Energiespeicherzelle 1 kann verhindert werden.

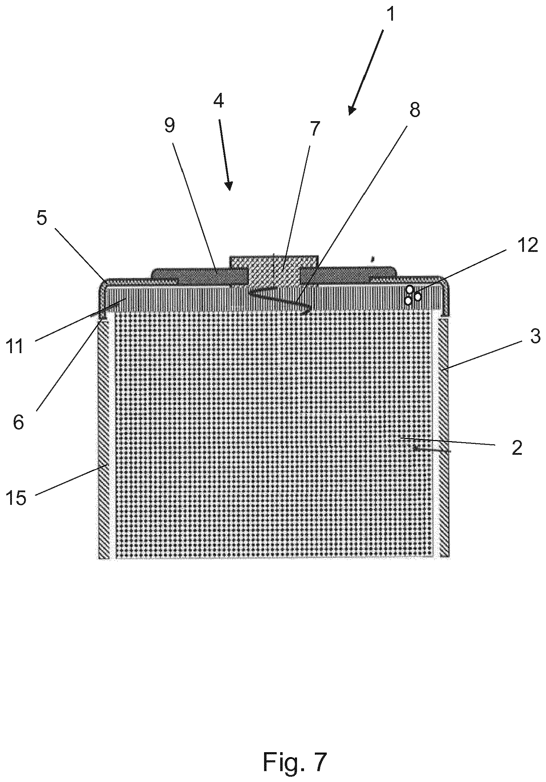

Figur 7 zeigt eine Energiespeicherzelle 1 gemäß Figur 1, wobei zwischen Zellwickel 2 und Deckel 5 ein Isolationselement 11 angeordnet ist. Das Isolationselement 11 besteht aus elastomerem Werkstoff, vorliegend aus einem Silikonwerkstoff. Das Isolationselement 11 ist mit wärmeleitenden Partikeln 12 ausgerüstet. Nach der Montage gelangt das Isolationselement 11 in Kontakt mit dem Elektrolyten des Zellwickels 2, was zu einem Quellen des Isolationselementes 11 führt. Dadurch füllt das Isolationselement 11 den Zwischenraum zwischen Zellwickel 2 und Deckel 5 aus. Die wärmeleitenden Partikel sind elektrisch nicht-leitfähige, mineralische Partikel. Vorteilhafte wärmeleitende Partikel 12 sind Aluminiumoxid (Al₂O₃), Aluminium-Oxid-Hydroxid (AIOOH), Aluminiumhydroxid (Al(OH)₃), Magnesiumhydroxid (Mg(OH)₂) oder Bornitrid (BN).

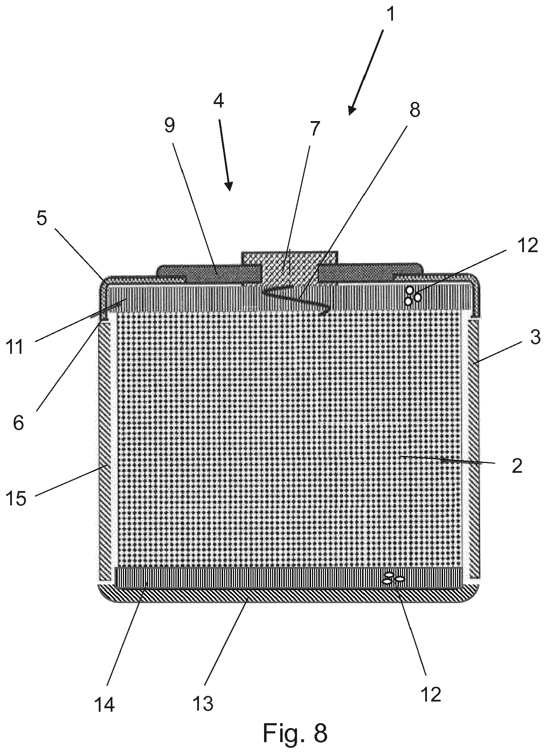

Figur 8 zeigt eine Weiterbildung der in Figur 7 gezeigten Energiespeicherzelle 1. Bei der vorliegenden Ausgestaltung ist zwischen Boden 13 des Gehäuses 3 und Zellwickel 2 ein weiteres Isolationselement 14 angeordnet. Auch das weitere Isolationselement 14 ist mit wärmeleitenden Partikeln 12 ausgerüstet und besteht aus einem Silikonwerkstoff.

Als Werkstoff für das Ausgleichselement 9 kommen insbesondere folgende Werkstoffe in Betracht: Ethylenpropylendienmonomer (EPDM), Methylkautschuk (IIR), Fluorkautschuk (FKM), Polyacrylat-Kautschuk (ACM), Silikon-Kautschuk (VMQ) oder fluorierter Silikon-Kautschuk (F-VMQ).

Prinzipiell ist aber auch denkbar, das Ausgleichselement 9 aus einem thermoplastischen Elastomer (TPE) oder aus einem thermoplastischen Werkstoff wie Polyethylen (PE) oder Polypropylen (PP) auszubilden. Bei dieser Ausgestaltung sind in das Ausgleichselement 9 vorzugsweise elastisch bewegliche Abschnitte wie Sicken, Filmscharnier oder dergleichen eingebracht.

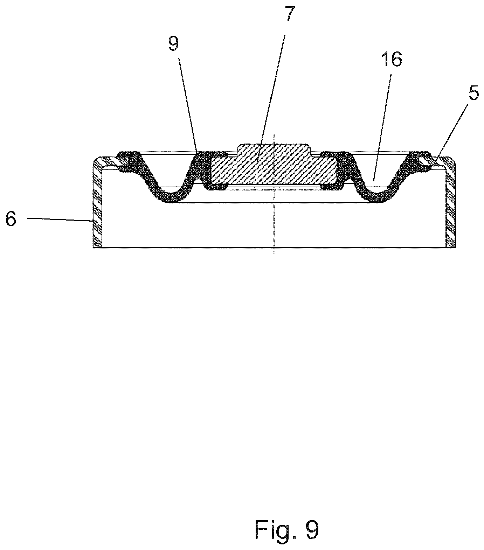

Ein derartiges Ausgleichselement 9 mit elastischer Formgebung ist in Figur 9 gezeigt. Die Elastizität und Nachgiebigkeit des Ausgleichselementes 9 wird bei dieser Ausgestaltung durch eine umlaufende, konzentrisch angeordnete Sicke 16 bewirkt. Dadurch ist das Ausgleichselement 9 nach Art einer faltenbalgförmigen Membran geformt, so dass sich der Polabschnitt 7 in axialer Richtung bewegen kann.

## Patentansprüche

1. Elektrochemische Energiespeicherzelle (1), umfassend einen Zellwickel (2), welcher in einem Gehäuse (3) aufgenommen ist, wobei das Gehäuse (3) zumindest auf einer Stirnseite (4) durch einen Deckel (5) verschlossen ist, wobei der Deckel (5) einen Befestigungsabschnitt (6) zum Befestigen des Deckels (5) auf dem Gehäuse (3) und einen Polabschnitt (7) zum Kontaktieren eines Ableiters (8) des Zellwickels (2) aufweist, wobei der Befestigungsabschnitt (6) und der Polabschnitt (7) über ein Ausgleichselement (9) miteinander verbunden sind, wobei das Ausgleichselement (9) elastisch und elektrisch isolierend ausgebildet ist, **dadurch gekennzeichnet, dass** in das Ausgleichselement (9) eine Sollbruchstelle (10) eingebracht ist.

2. Energiespeicherzelle nach Anspruch 1, **dadurch gekennzeichnet, dass** das Ausgleichselement (9) aus elastomerem Werkstoff ausgebildet ist.

3. Energiespeicherzelle nach Anspruch 1 oder 2, **dadurch gekennzeichnet, dass** das Ausgleichselement (9) elastisch beweglich geformt ist.

4. Energiespeicherzelle nach Anspruch 1, **dadurch gekennzeichnet, dass** die Sollbruchstelle (10) in Form einer Nut ausgebildet ist.

5. Energiespeicherzelle nach einem der Ansprüche 1 bis 4, **dadurch gekennzeichnet, dass** der Deckel (5) stoffschlüssig an das Gehäuse (3) angebunden ist.

6. Energiespeicherzelle nach einem der Ansprüche 1 bis 5, **dadurch gekennzeichnet, dass** der Deckel (5) mittels elektromagnetischem Pulsumformen am Gehäuse (3) festgelegt ist.

7. Energiespeicherzelle nach einem der Ansprüche 1 bis 6, **dadurch gekennzeichnet, dass** zwischen Zellwickel (2) und Deckel (5) ein Isolationselement (11) angeordnet ist.

8. Energiespeicherzelle nach Anspruch 7, **dadurch gekennzeichnet, dass** das Isolationselement (11) aus einem elastomeren Werkstoff ausgebildet ist.

9. Energiespeicherzelle nach Anspruch 7 oder 8, **dadurch gekennzeichnet, dass** das Isolationselement (11) aus einem Silikonwerkstoff ausgebildet ist.

10. Energiespeicherzelle nach einem der Ansprüche 7 bis 9, **dadurch gekennzeichnet, dass** das Isolationselement (11) mit wärmeleitfähigen Partikeln (12) ausgerüstet ist.

11. Energiespeicherzelle nach einem der Ansprüche 7 bis 10, **dadurch gekennzeichnet, dass** zwischen Boden (13) des Gehäuses (3) und Zellwickel (2) ein weiteres Isolationselement (14) angeordnet ist.

## Claims

1. Electrochemical energy storage cell (1), comprising a wound electrode assembly (2) which is received in a housing (3), wherein the housing (3) is closed at least on one end side (4) by a cover (5), wherein the cover (5) has a fastening portion (6) for fastening the cover (5) to the housing (3) and a pole portion (7) for contacting a collector (8) of the wound electrode assembly (2), wherein the fastening portion (6) and the pole portion (7) are connected to one another via a compensating element (9), wherein the compensating element (9) is of elastic and electrically insulating design, **characterized in that** a predetermined breaking point (10) is introduced into the compensating element (9).

2. Energy storage cell according to Claim 1, **characterized in that** the compensating element (9) is formed from elastomeric material.

3. Energy storage cell according to Claim 1 or 2, **characterized in that** the compensating element (9) is of elastically movable form.

4. Energy storage cell according to Claim 1, **characterized in that** the predetermined breaking point (10) is in the form of a groove.

5. Energy storage cell according to any of Claims 1 to 4, **characterized in that** the cover (5) is attached to the housing (3) in a materially bonded manner.

6. Energy storage cell according to any of Claims 1 to 5, **characterized in that** the cover (5) is fixed to the housing (3) by means of electromagnetic pulse forming.

7. Energy storage cell according to any of Claims 1 to 6, **characterized in that** an insulating element (11) is arranged between the wound electrode assembly (2) and the cover (5).

8. Energy storage cell according to Claim 7, **characterized in that** the insulating element (11) is formed from an elastomeric material.

9. Energy storage cell according to Claim 7 or 8, **characterized in that** the insulating element (11) is formed from a silicone material.

10. Energy storage cell according to any of Claims 7 to 9, **characterized in that** the insulating element (11) is equipped with thermally conductive particles (12).

11. Energy storage cell according to any of Claims 7 to 10, **characterized in that** a further insulating element (14) is arranged between the bottom (13) of the housing (3) and the wound electrode assembly (2).

## Revendications

1. Elément accumulateur d'énergie électrochimique (1) comprenant un enroulement d'électrode (2), qui est logé dans un boîtier (3), le boîtier (3) étant fermé au moins sur une face frontale (4) par un couvercle (5), le couvercle (5) comportant une section de fixation (6) pour fixer le couvercle (5) sur le boîtier (3) et une section polaire (7) pour mettre en contact un conducteur (8) de l'enroulement d'électrode (2), la section de fixation (6) et la section polaire (7) étant reliées l'une à l'autre par un élément de compensation (9), l'élément de compensation (9) étant formé de manière élastique et de manière électriquement isolante, **caractérisé en ce qu'**un point de rupture théorique (10) est pratiqué dans l'élément de compensation (9).

2. Elément accumulateur d'énergie selon la revendication 1, **caractérisé en ce que** l'élément de compensation (9) est formé à partir d'un matériau élastomère.

3. Elément accumulateur d'énergie selon la revendication 1 ou 2, **caractérisé en ce que** l'élément de compensation (9) est formé de manière élastiquement mobile.

4. Elément accumulateur d'énergie selon la revendication 1, **caractérisé en ce que** le point de rupture théorique (10) est formé comme une rainure.

5. Elément accumulateur d'énergie selon l'une des revendications 1 à 4, **caractérisé en ce que** le couvercle (5) est attaché par liaison de matière au boîtier (3).

6. Elément accumulateur d'énergie selon l'une des revendications 1 à 5, **caractérisé en ce que** le couvercle (5) est fixé sur le boîtier (3) au moyen d'une mise en forme par impulsions électromagnétiques.

7. Elément accumulateur d'énergie selon l'une des revendications 1 à 6, **caractérisé en ce qu'**un élément isolant (11) est disposé entre l'enroulement d'électrode (2) et le couvercle (5).

8. Elément accumulateur d'énergie selon la revendication 7, **caractérisé en ce que** l'élément isolant (11) est formé à partir d'un matériau élastomère.

9. Elément accumulateur d'énergie selon la revendication 7 ou 8, **caractérisé en ce que** l'élément isolant (11) est formé à partir d'un matériau en silicone.

10. Elément accumulateur d'énergie selon l'une des revendications 7 à 9, **caractérisé en ce que** l'élément isolant (11) est équipé de particules (12) thermoconductrices.

11. Elément accumulateur d'énergie selon l'une des revendications 7 à 10, **caractérisé en ce qu'**un autre élément isolant (14) est disposé entre le fond (13) du boîtier (3) et l'enroulement d'électrode (2).
